# EUROPEAN PATENT SPECIFICATION

(11) **EP 1 509 630 B1**
(45) Date of publication and mention of the grant of the patent: **01.03.2006**
(21) Application number: 03725344.0
(22) Date of filing: 25.04.2003
(51) Int. Cl.: C22C 32/00, B01J 23/755, B01J 23/889, B01J 37/00, B01J 37/16, C22B 5/12, C22B 23/02, C22C 1/00, C01B 31/06, B01J 3/06

(54) **PROCESS FOR MANUFACTURING AN ALLOY MATERIAL FOR USE IN THE MANUFACTURE OF SYNTHETIC DIAMONDS**
VERFAHREN ZUR HERSTELLUNG EINER LEGIERUNG ZUR ANWENDUNG FÜR DIE HERSTELLUNG VON SYNTHETISCHEN DIAMANTEN
PROCEDE POUR PRODUIRE DU DIAMANT PAR CATALYSE, PROCEDE DE TRAITEMENT DE GRAPHITE, ET MELANGE CATALYTIQUE UTILISE DANS LE CADRE DE LA SYNTHESE

(30) Priority: 25.04.2002 US 375608 P
(43) Date of publication of application: 02.03.2005
(73) Proprietor: THE MORGAN CRUCIBLE COMPANY PLC, Windsor, Berkshire SL4 1LP (GB)
(72) Inventor: TURPIN, Mark, Christopher; Legal Department,, Madeira Walk Windsor, Berkshire SL4 1EP (GB); CLARK, Richard, Findlay, OH 45840 (US)
(74) Representative: Boff, James Charles
(86) International application number: PCT/GB2003/001787
(87) International publication number: WO 2003/091467

(56) References cited:
- EP-A- 0 459 693
- EP-A- 0 579 376
- WO-A-00/23630
- US-A- 3 473 914
- US-A- 3 663 667
- US-A- 4 304 600
- US-A- 4 498 395
- DATABASE WPI Section Ch, Week 198613 Derwent Publications Ltd., London, GB; Class L02, AN 1986-084910 XP002262803 & JP 61 031354 A (SUMITOMO ELECTRIC IND CO), 13 February 1986 (1986-02-13)
- PATENT ABSTRACTS OF JAPAN vol. 009, no. 012 (C-261), 18 January 1985 (1985-01-18) & JP 59 164605 A (SHOWA DENKO KK), 17 September 1984 (1984-09-17)
- DATABASE WPI Section Ch, Week 198605 Derwent Publications Ltd., London, GB; Class E36, AN 1986-033286 XP002262804 & JP 60 255695 A (MATSUSHITA ELEC IND CO LTD), 17 December 1985 (1985-12-17)
- DATABASE WPI Section Ch, Week 197928 Derwent Publications Ltd., London, GB; Class E36, AN 1979-51834B XP002262805 & JP 54 069590 A (TOKYO SHIBAURA ELECTRIC CO), 4 June 1979 (1979-06-04)

## Description

### Field of the Invention

The present invention provides a method of combination of the graphite source used in the manufacture of synthetic diamonds and the catalyst used in the conversion of the graphite source to diamond. Additionally, the graphite and catalyst mixture, made by methods described herein or otherwise, can be processed into a form that may be used to improve manufacturing efficiencies in the diamond synthesis process.

### Background of the Invention

The conventional understanding of the catalytic mechanism in the manufacture of synthetic diamond is based on a simple solution model, in which graphite dissolves into the molten metal form of the catalyst, and diamond precipitates out due to its lower solubility. However, this does not explain how the type of diamond formed is so significantly affected by the graphite microstructure. For example, non-graphitized forms of carbon can only form diamond, if at all, at a much higher pressure than graphitized forms, or must first be converted to graphite. The rates of diamond nucleation and growth are strongly dependent on the degree of graphitization of the carbon source: the higher the level of graphitization, the faster the diamond can nucleate and grow. The solution mechanism cannot explain why certain metals such as copper are unable to form diamond even though they may dissolve small amounts of carbon. A catalytic action is widely considered as the reason for the apparent dependency of diamond formation on graphite structure and metal chemistry.

The catalytic mechanism has been proposed to be based on the electronic interaction between the empty 3d orbitals of transition metals and the unbonded (π bond) 2p electron of carbon. Although such a model provides a basis for explaining certain empirical observations, it does not provide acceptable explanations for the impact of the graphite's stacking sequence nor the consequence of having catalytic metals such as titanium and vanadium with very high deficiencies of d-orbital electrons.

A more recent explanation for the sequence of events for diamond synthesis under high pressure has been provided: (1) the molten catalyst metal penetrates structurally weak regions of the graphite, forcing the graphite to disintegrate into microscopic flakes; (2) metal atoms penetrate the graphite flakes by intercalation and shuffle the graphite stacking sequence into the rhombohedral form; (3) the rhombohedral graphite flakes are puckered under the influence of molten catalyst sticking them together to form a diamond nucleus; (4) the diamond nucleus grows by continuously feeding on microscopic flakes, and, as the diamond grows in size, the molten catalyst is pulled in by the capillary effect, allowing the thin metal envelope to expand continuously around the growing diamond.

Presently, two methods are commonly used for combining the graphite with a catalyst material. The first is a layering method where alternate layers of graphite and catalyst are present in the reaction cell (the catalyst being typically in disk form). The second is a powder method where high purity graphite powder is mixed with alloy powder. The powder method has many benefits because of the inherent improvement in homogeneity. However, there are problems with the powder method because of the density differences between the catalyst metal and the graphite and consequent segregation. Much work has been done to develop manufacturing methods that will minimize this problem.
EP-A-0579376 discloses the preparation of a precursor material made by wet chemical methods for use in manufacture of a sintered carbide/metal product optionally containing diamond.
JP60-255695, JP54-069590, and JP61-031354 disclose preparation of diamond materials but do not use wet chemical methods in preparation of alloys used in such methods.
JP59-164605 discloses a method of diamond synthesis in which bodies of a solvent metal are coated with graphite powder and placed in a ceramic former. There is no disclosure of the form of the metal.

### Summary of the Invention

The scope of this invention is as set out in the appended claims in the light of the following description.

It is an object of this invention to provide methods for combining graphite with catalyst materials to facilitate intimate mixing, which in turn leads to improvement of the manufacturability of synthetic diamond. Significant yield improvements may also result from this mixing and processing.

Methods according to the present invention are based on utilization of standard catalyst materials and alloys used in diamond synthesis. However, certain embodiments of the invention offer an additional benefit in that the production of small batches of catalyst can be accomplished without the typical expense associated with the standard method of catalyst manufacture, that is, inert gas atomization of the catalyst alloy. Consequently, additional catalysts may be developed, and it is within the scope of this invention that all such catalysts developed according to methods of the invention be included in addition to those in current use from the transition metals and their alloys.

### Brief Description of the Drawings

Fig. 1 shows process flow for the manufacture of alloy materials for use in the manufacture of synthetic diamonds according to an embodiment of the present invention.
Fig. 2 shows process flow for the manufacture of alloy materials for use in the manufacture of synthetic diamonds according to another embodiment of the present invention.
Fig. 3 shows process flow for the manufacture of alloy materials for use in the manufacture of synthetic diamonds according to another embodiment of the present invention.
Fig. 4 shows process flow for the manufacture of alloy materials for use in the manufacture of synthetic diamonds according to yet another embodiment of the present invention.
Fig. 5 shows process flow for the use of spray-drying in the manufacture of moldable material for use as a precursor in the manufacture of synthetic diamonds according to one embodiments of the present invention.
Fig. 6 shows process flow for the use of spray-drying in the manufacture of moldable material for use as a precursor in the manufacture of synthetic diamonds according to another embodiment of the present invention.

### Detailed Description of the Invention

According to certain embodiments of the invention, catalyst materials for diamond synthesis are manufactured chemically using a wet chemical method instead of producing an alloy in melt form and passing the melt through an inert gas atomization system. Typically, the elements of the catalyst are provided in chemically bound form (e.g., as salts), dispersed to form a particulate material providing intimate contact of the elements of the catalyst, and then reduced to form the catalyst.

In certain exemplary embodiments, a mixed salt or mixture of salts of the catalyst elements is formed to provide intimate contact of the elements of the catalyst, the mixed salt or mixture of salts is then dispersed to provide a particulate form of the mixed salt or mixture of salts, and the particulate form of the mixed salt or mixture of salts is then reduced to the alloy.

According to one embodiment, the correct atomic ratios of insoluble metal carbonates are calculated and the metal carbonates are ball milled together in water to form a slurry. The slurry is spray-dried, generating a particulate metal carbonate mixture. The particulate material is calcined and the resulting oxide mixture reduced to metal powder. Reduction is accomplished using any of several methods that are described below.

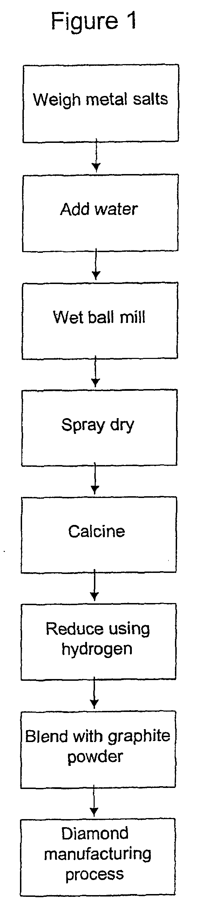

Fig. 1 shows process flow for the manufacture of alloy materials for use in the manufacture of synthetic diamonds according to an embodiment of the present invention. In one example, a standard alloy that is 70 wt.% Ni, 25 wt.% Mn, and 5 wt. % Co is manufactured. The amounts provided below allow manufacture of a small quantity of a catalyst material. The starting carbonates are:
544.216g MnCO₃ (~46.25% Mn - Sigma Aldrich Cat No 37,744-9)
1549.39g 2NiCO₃.3Ni(OH)₂.4H2O (~45.05% Ni - Sigma Aldrich Cat No 33,977-6)
108.93g CoCO₃.xH₂O (45.9% Co - Sigma Aldrich Cat No 20,219- 3)
These ingredients are milled with 3.8 kg of alumina milling media in two liters of distilled water for approximately ten hours. The suspension is then dispersed in a further three liters of distilled water and spray dried at ~250°C (~500°F). The particulate metal oxide mixture is calcined at 300°C/hour to 600°C and held at 600°C for four hours in an electric furnace, yielding approximately 1.15 kg of the catalyst material.

The catalyst material is then reduced to an alloy powder in a hydrogen reduction furnace. Graphite powder is then combined with the finely divided catalyst alloy. The mixture of graphite and alloy powder is used as a precursor material in the manufacture of synthetic diamonds in any number of standard ways, as is understood by those skilled in the art.

Other examples of standard alloys which may be manufactured by this method and which are commonly used in the manufacture of synthetic diamonds are as follows:
(A) An alloy of Fe 65%, Ni 35% may be manufactured. A small quantity of catalyst material may be produced from the following starting materials:
   776.9g 2NiCO₃.3Ni(OH)₂.4H₂O (~45.05% Ni - Sigma Aldrich Cat No 33,977-6)
   921.1 g precipitated Fe₂O₃ (~69.96% Fe - Fisher Scientific Cat No I/1150/53)
   A carbonate of iron is not commonly available, and thus precipitated iron (III) oxide is used in this example. These ingredients are milled with 3.8 kg of alumina milling media in two liters of distilled water for approximately ten hours. The suspension is then dispersed in a further three liters of distilled water and spray dried at ~250°C (~500°F). The particulate metal oxide mixture is calcined at 300°C/hour to 600°C and held at 600°C for four hours in an electric furnace, yielding approximately 1.22 kg of the catalyst material which may then be reduced to an alloy.
(B) An alloy of Ni 70%, Mn 30% may be manufactured. A small quantity of catalyst material may be produced from the following starting materials:
   1553.8g 2NiCO₃.3Ni(OH)₂.4H₂O (~45.05% Ni - Sigma Aldrich Cat No 33,977-6)
   648.6g MnCO₃ (~46.25% Mn - Sigma Aldrich Cat No 37,744-9)
   These ingredients are milled with 3.8 kg of alumina milling media in two liters of distilled water for approximately ten hours. The suspension is then dispersed in a further three liters of distilled water and spray dried at ~250°C (~500°F). The particulate metal oxide mixture is calcined at 300°C/hour to 600°C and held at 600°C for four hours in an electric furnace, yielding approximately 1.3 kg of the catalyst material which may then be reduced to an alloy.
(C) An alloy of Ni 40%, Fe 30%, and Mn 30% may be manufactured. A small quantity of catalyst material may be produced from the following starting materials:
   887.9g 2NiCO₃.3Ni(OH)₂.4H₂O (~45.05% Ni - Sigma Aldrich Cat No 33,977-6)
   428.8g precipitated Fe₂O₃ (~69.96% Fe - Fisher Scientific Cat No I/1150/53)
   648.6g MnCO₃ (~46.25% Mn - Sigma Aldrich Cat No 37,744-9)
A carbonate of iron is not commonly available, and thus precipitated iron (III) oxide is used in this example: These ingredients are milled with 3.8 kg of alumina milling media in two liters of distilled water for approximately ten hours. The suspension is then dispersed in a further three liters of distilled water and spray dried at ~250°C (~500°F). The particulate metal oxide mixture is calcined at 300°C/hour to 600°C and held at 600°C for four hours in an electric furnace, yielding approximately 1.25 kg of the catalyst material which may then be reduced to an alloy.
In all of the above examples hydrogen reduction will yield approximately 1kg of alloy metal. Reduction at a temperature below the alloy melting point, coupled with natural decrepitation of the metal in the hydrogen atmosphere will ensure that the reduced catalyst is finely powdered.

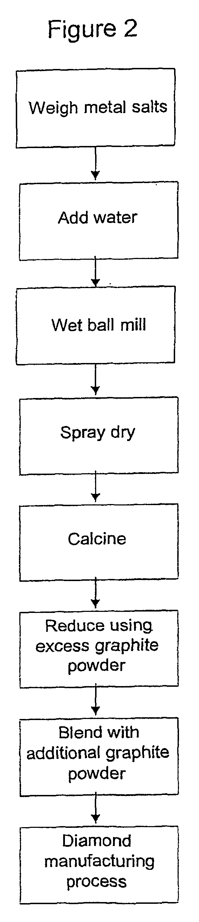

Fig. 2 shows process flow for the manufacture of alloy materials for use in the manufacture of synthetic diamonds according to another embodiment of the present invention. In this embodiment, following calcination of the particulate metal carbonate mixture, the resulting oxide mixture is reduced by mixing it with an excess of graphite powder and calcining the mixture. Graphite is oxidized and the metal oxide mixture is reduced to an alloy mixed intimately with the graphite. Accordingly, an intimate mixture of graphite and catalyst alloy now exists, which can be assessed either by calculation or by chemical analysis, and additional graphite powder can be added to the graphite/catalyst mixture to obtain the required ratio for a precursor material in the manufacture of synthetic diamonds. This method has an additional benefit in that the oxygen, which is pulled from the metal oxide during the reduction process by the graphite, preferentially attacks the disordered (turbostratic) carbon form within the graphite, resulting in both yield and diamond quality improvements. In an example of this embodiment, a standard catalyst mixture is spray dried at ~250°C (~500°F) and then mixed with approximately 2.5 kg of suitable graphite powder, such as, for example, Morgan-National PCP23. The mixture is calcined within a sealed saggar at 300°C/hour to 600°C and held at 600°C for four hours in an electric furnace. This procedure yields approximately 3.25 kg of intimately mixed graphite and catalyst according to the invention.

The salt or salts (e.g. carbonates) used in this invention may be produced by a displacement reaction in which soluble salts are used to produced an insoluble product. In certain exemplary embodiments of this invention, a mixture of soluble chloride salts may be precipitated in situ with ammonium carbonate to form the insoluble carbonates.

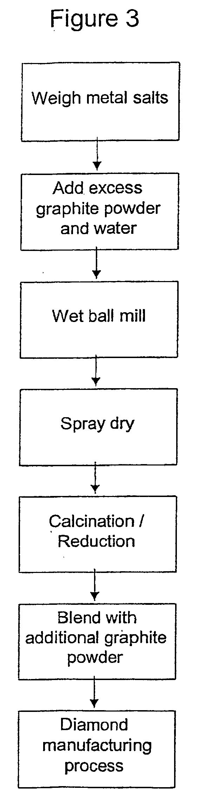

Fig. 3 shows process flow for the manufacture of alloy materials for use in the manufacture of synthetic diamonds according to yet another embodiment of the present invention. In this embodiment, graphite powder may be added to and mixed with the metal carbonate mixture prior to spray drying the slurry. After the resultant slurry is spray dried, subsequent calcination causes reduction of the alloy salts and an intimate mixture of graphite and catalyst alloy exists. The benefits described above, associated with the preferential removal of turbostratic carbon from the graphite during the reduction process, will again apply. Once again, additional graphite powder may be added to the graphite/catalyst mixt ure to achieve the ratio required for use of the graphite/catalyst mixture as a precursor material in the manufacture of synthetic diamonds. The form of the graphite/catalyst particles are particularly useful for compaction and these compacts are well-suited for the manufacture of synthetic diamonds.

In an example of this embodiment, a standard catalyst mixture is ball milled as above. The suspension is then dispersed in a further ten liters of distilled water and mixed with approximately 2.5 kg of suitable graphite powder, such as, for example, Morgan-National PCP23, together with a dispersing/wetting agent such as aryl sulphonate. The mixture is spray dried at ~250°C (~500°F) and then calcined within a sealed saggar at 300°C/hour to 600°C and held at 600°C for four hours in an electric furnace. This procedure yields approximately 3.25 kg of intimately mixed graphite and catalyst according to the invention.

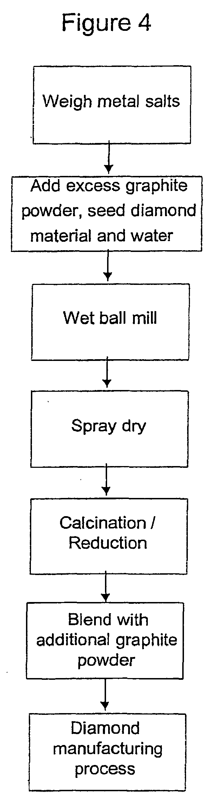

Fig. 4 shows process flow for the manufacture of alloy materials for use in the manufacture of synthetic diamonds according to another embodiment of the present invention. In this embodiment, diamond grit of which the ultimate function is to act as a seed material, along with the graphite powder, can be added to and mixed with the slurry prior to spray drying. This provides an intimate mixture of graphite, catalyst, and seed diamonds which can be used for powder or compact preparation in the manufacturing process for synthetic diamonds.

In all the above embodiments, yield benefits can be obtained because the catalyst and graphite powders are in intimate contact because of the fine ness of the catalyst materials and because of the methods by which catalyst materials are combined with graphite powders. This intimacy is not obtained in current standard manufacturing routes without complex process steps involving blending and/or partial compaction.

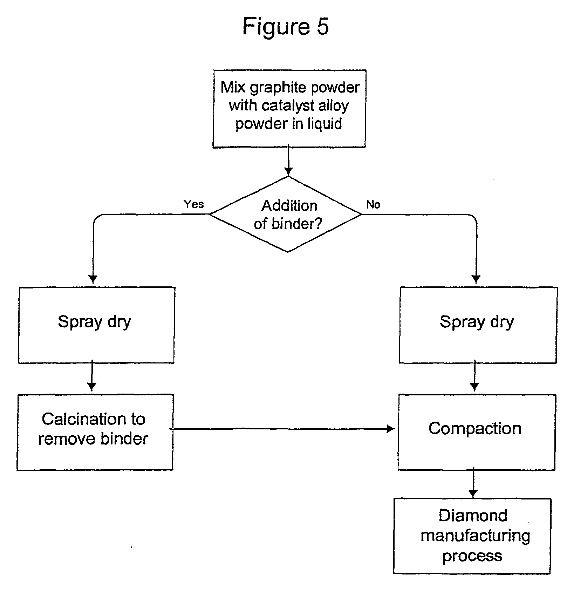

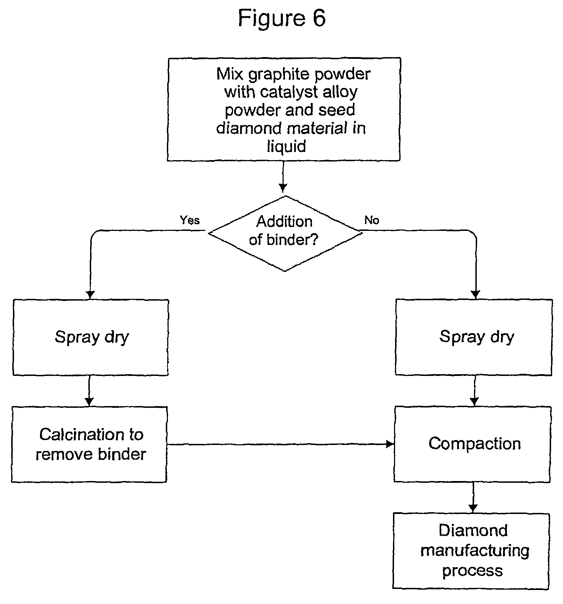

Fig. 5 shows process flow for the use of spray-drying in the manufacture of moldable material for use as a precursor in the manufacture of synthetic diamonds according to one embodiments of the present invention. Fig. 6 shows process flow for the use of spray-drying in the manufacture of moldable material for use as a precursor in the manufacture of synthetic diamonds according to another embodiment of the present invention. Diamond grit is included in the mixture in the embodiment shown in Fig. 6, while the embodiment shown in Fig. 5 does not include diamond grit.

The foregoing description of the exemplary embodiments of the invention has been presented only for the purposes of illustration and description and is not intended to be exhaustive or to limit the invention to the precise forms disclosed. Many modifications and variations are possible in light of the above teaching. The embodiments were chosen and described in order to explain the principles of the invention and their practical application so as to enable others skilled in the art to utilize the invention and various embodiments and with various modifications as are suited to the particular use contemplated.

## Claims

1. A method of making a diamond synthesis precursor material, comprising the steps of:-
a) forming a catalyst alloy material chemically using a wet chemical met hod and
b) combining the catalyst alloy with a required amount of graphite powder.

2. A method, as claimed in Claim 1, in which the method comprises the steps of:-
a) producing a salt or salts of the alloy constituents; and,
b) reducing said salt or salts to form the alloy.

3. A method, as claimed in Claim 2, in which:-
a) the salt or salts are insoluble salts;
b) the salt or salts are milled and dispersed in water to form a slurry; and
c) the slurry is spray dried.

4. A method, as claimed in Claim 3, in which the salt or salts are calcined to produce an oxide prior to reduction of the salt or salts to an alloy.

5. A method, as claimed in Claim 4, in which the salt or salts are carbonates.

6. A method, as claimed in Claim 3, in which the insoluble salt or salts are produced by a displacement reaction between soluble salts.

7. A method, as claimed in Claim 6, in which the displacement reaction is between soluble chloride salts and ammonium carbonate.

8. A method, as claimed in Claim 1, comprising the steps of:
a) mixing insoluble metal carbonates in water and alumina milling media;
b) dispersing the mixture in water to form a slurry;
c) spray drying the slurry, which generates a particulate metal carbonate mixture;
d) calcining the particulate mixture; and
e) reducing the oxide mixture to metal powder.

9. A method as claimed in any one of Claims 2 to 8, wherein reducing the salt or salts comprises placing the salt or salts in a hydrogen reduction furnace.

10. A method as claimed in Claim 9, in which the reduction occurs below the melting point of the alloy.

11. A method as claimed in any one of Claims 2 to 8, wherein reducing the salt or salts comprises calcining the salt or salts in the presence of an excess of graphite powder to produce an alloy intimately combined with graphite.

12. A method as claimed in Claim 11 wherein the graphite powder is mixed with the salt or salts prior to spray drying the slurry.

13. A method as claimed in any one of Claims 1 to 12, in which additional graphite is added to the alloy.

14. A method as claimed in any one of Claims 1 to 13, in which the catalyst material and graphite powder are combined with diamond grit.

15. A method of making diamonds comprising the use of a diamond synthesis precursor material produced by the method of any one of Claims 1 to 14.

16. The use of spray-drying as a method for manufacturing a mouldable diamond synthesis precursor for use in the manufacture of synthetic diamonds, this material being composed of a mixture of graphite and catalyst alloy, made according to claim 1.

17. The use claimed in Claim 16, wherein said mouldable material is used without added diamond grit.

18. The use claimed in Claim 16, wherein said mouldable material contains diamond grit for use as a seed material.

## Revendications

1. Procédé de fabrication d'un matériau précurseur pour la synthèse du diamant, comprenant les étapes qui consistent à :
a) former chimiquement un matériau qui est un alliage catalyseur en utilisant un procédé chimique humide ; et
b) combiner l'alliage catalyseur avec une quantité requise de poudre de graphite.

2. Procédé selon la revendication 1, dans lequel le procédé comprend les étapes qui consistent à :
a) produire un sel ou des sels des éléments constituants de l'alliage ; et
b) réduire ledit sel ou lesdits sels pour former l'alliage.

3. Procédé selon la revendication 2, dans lequel :
a) le sel ou les sels sont des sels insolubles ;
b) le sel ou les sels sont broyés et dispersés dans de l'eau pour former une suspension ; et
c) la suspension est séchée par pulvérisation.

4. Procédé selon la revendication 3, dans lequel le sel ou les sels sont calcinés pour produire un oxyde avant la réduction du sel ou des sels pour former un alliage.

5. Procédé selon la revendication 4, dans lequel le sel ou les sels sont des carbonates.

6. Procédé selon la revendication 3, dans lequel le sel ou les sels insolubles sont produits par une réaction de déplacement entre des sels solubles.

7. Procédé selon la revendication 6, dans lequel la réaction de déplacement a lieu entre des sels solubles qui sont des chlorures et le carbonate d'ammonium.

8. Procédé selon la revendication 1, comprenant les étapes qui consistent à :
a) mélanger des carbonates de métaux insolubles dans de l'eau et un milieu de broyage constitué d'alumine ;
b) disperser le mélange dans de l'eau pour former une suspension ;
c) sécher la suspension par pulvérisation, ce qui produit un mélange particulaire de carbonates de métaux ;
d) calciner le mélange particulaire ; et
e) réduire le mélange d'oxydes pour produire une poudre métallique.

9. Procédé selon l'une quelconque des revendications 2 à 8, dans lequel la réduction du sel ou des sels comprend la mise en place du sel ou des sels dans un four à réduction à hydrogène.

10. Procédé selon la revendication 9, dans lequel la réduction a lieu en dessous du point de fusion de l'alliage.

11. Procédé selon l'une quelconque des revendications 2 à 8, dans lequel la réduction du sel ou des sels comprend la calcination du sel ou des sels en présence d'une quantité excédentaire de poudre de graphite pour produire un alliage combiné intimement avec le graphite.

12. Procédé selon la revendication 11, dans lequel la poudre de graphite est mélangée avec le sel ou les sels avant le séchage de la suspension par pulvérisation.

13. Procédé selon l'une quelconque des revendications 1 à 12, dans lequel une quantité additionnelle de graphite est ajoutée à l'alliage.

14. Procédé selon l'une quelconque des revendications 1 à 13, dans lequel le matériau catalyseur et la poudre de graphite sont combinés avec des particules de diamant.

15. Procédé de fabrication de diamants, comprenant l'utilisation d'un matériau précurseur pour la synthèse du diamant produit par le procédé selon l'une quelconque des revendications 1 à 14.

16. Emploi du séchage par pulvérisation comme procédé de fabrication d'un précurseur moulable pour la synthèse du diamant destiné à une utilisation dans la fabrication des diamants synthétiques, ce matériau étant constitué d'un mélange de graphite et d'alliage catalyseur, fabriqué selon la revendication 1.

17. Utilisation selon la revendication 16, dans laquelle ledit matériau moulable est utilisé sans addition de particules de diamant.

18. Utilisation selon la revendication 16, dans laquelle ledit matériau moulable contient des particules de diamant destinées à une utilisation comme matériau d'ensemencement.

## Patentansprüche

1. Verfahren zur Herstellung eines Diamantensynthesezwischenproduktmaterials, das die folgenden Schritte umfasst:
a) chemisches Bilden eines Katalysatorlegierungsmaterials mit Benutzung eines nassen chemischen Verfahrens und
b) Kombinieren der Katalysatorlegierung mit einer erforderten Menge von Graphitpulver.

2. Verfahren nach Anspruch 1, in dem das Verfahren die folgenden Schritte umfasst:
a) Herstellen eines Salzes oder von Salzen der Legierungskomponenten; und
b) Reduzieren des Salzes oder der Salze, um eine Legierung zu bilden.

3. Verfahren nach Anspruch 2, in dem
a) das Salz oder die Salze unlösbare Salze sind;
b) das Salz oder die Salze zerkleinert und in Wasser verteilt werden, um einen Schlamm zu bilden; und
c) der Schlamm sprühgetrocknet wird.

4. Verfahren nach Anspruch 3, in dem das Salz oder die Salze kalziniert werden, um ein Oxid vor der Reduktion des Salzes oder der Salze zu einer Legierung herzustellen.

5. Verfahren nach Anspruch 4, in dem das Salz oder die Salze Carbonate sind.

6. Verfahren nach Anspruch 3, in dem das unlösbare Salz oder Salze durch eine Ersetzungsreaktion zwischen lösbaren Salzen hergestellt werden.

7. Verfahren nach Anspruch 6, in dem die Ersetzungsreaktion zwischen lösbaren Chloridsalzen und Ammoniumcarbonat stattfindet.

8. Verfahren nach Anspruch 1, das die folgenden Schritte umfasst:
a) Mischen von unlösbaren Metallcarbonaten in Wasser und Aluminiumzerkleinerungsmedien;
b) Verteilen der Mischung in Wasser, um einen Schlamm zu bilden;
c) Sprühtrocknen des Schlamms, was eine Metallpartikelcarbonatmischung erzeugt;
d) Kalzinieren der Partikelmischung; und
e) Reduzieren der Oxidmischung zu Metallpulver.

9. Verfahren nach einem der Anprüche 2 bis 8, in dem Reduzieren des Salzes oder der Salze umfasst, das Salz oder die Salze in einen Wasserstoffreduktionsschmelzofen zu bringen.

10. Verfahren nach Anspruch 9, in dem die Reduzierung unter dem Schmelzpunkt der Legierung stattfindet.

11. Verfahren nach einem der Anprüche 2 bis 8, in dem das Reduzieren des Salzes oder der Salze umfasst, das Salz oder die Salze in der Gegenwart eines Überschusses von Graphitpulver zu kalzinieren, um eine Legierung herzustellen, die eng mit Graphit verknüpft ist.

12. Verfahren nach Anspruch 11, in dem das Graphitpulver mit dem Salz oder den Salzen vor dem Sprühtrocknen des Schlamms gemischt wird.

13. Verfahren nach einem der Anprüche 1 bis 12, in dem der Legierung zusätzliches Graphit zugefügt wird.

14. Verfahren nach einem der Anprüche 1 bis 13, in dem das Katalysatormaterial und das Graphitpulver mit Diamantensand kombiniert werden.

15. Verfahren zur Herstellung von Diamanten, das die Benutzung eines Diamantensynthesezwischenproduktmaterials umfasst, das von dem Verfahren einer der Ansprüche 1 bis 14 hergestellt ist.

16. Benutzung von Sprühtrocknen als ein Verfahren zur Herstellung eines formbaren Diamantsynthesezwischenprudukts zur Benutzung bei der Herstellung von synthetischen Diamanten, wobei dieses Material aus einer Mischung von Graphit und Katalysatorlegierung hergestellt ist, das nach Anspruch 1 hegestellt ist.

17. Die in Anspruch 16 beanspruchte Benutzung, in der das formbare Material ohne zugefügten Diamantensand benutzt wird.

18. Die in Anspruch 16 beanspruchte Benutzung, in der das formbare Material Diamantensand zur Benutzung als Startmaterial enthält.
